# EUROPEAN PATENT SPECIFICATION

(11) **EP 2 309 702 B1**
(45) Date of publication and mention of the grant of the patent: **20.02.2019**
(21) Application number: 10187145.7
(22) Date of filing: 11.10.2010
(51) Int. Cl.: H04L 29/12, H04W 8/26, H04L 12/46

(54) **MOBILE TERMINATED COMMUNICATION METHOD**
KOMMUNIKATIONSVERFAHREN MIT EINEM MOBILEN ENDGERÄT
PROCÉDÉ DE COMMUNICATION TERMINÉ PAR UN MOBILE

(30) Priority: 12.10.2009 US 250840 P; 11.02.2010 US 303614 P
(43) Date of publication of application: 13.04.2011
(73) Proprietor: LG Electronics Inc., Seoul 150-721 (KR)
(72) Inventor: Stojanovski, Saso, 95942, Roissy CDG Cedex (FR); Vedrine, Arnaud, 95942, Roissy CDG Cedex (FR)
(74) Representative: Cabinet Plasseraud

(56) References cited:
- EP-A1- 1 263 171
- WO-A2-02/35801
- US-A1- 2005 086 373
- FALTSTROM CISCO SYSTEMS P ET AL: "The E.164 to Uniform Resource Identifiers (URI) Dynamic Delegation Discovery System (DDDS) Application (ENUM); rfc3761.txt", IETF STANDARD, INTERNET ENGINEERING TASK FORCE, IETF, CH, 1 April 2004 (2004-04-01), XP015009541, ISSN: 0000-0003
- DEGUANG LE ET AL: "A review of mobility support paradigms for the internet", IEEE COMMUNICATIONS SURVEYS, IEEE, NEW YORK, NY, US, vol. 8, no. 1, 1 January 2006 (2006-01-01) , pages 38-51, XP011172172, ISSN: 1553-877X, DOI: DOI:10.1109/COMST.2006.315853

## Description

The present invention relates to mobile terminated communication.

Mobile terminated communication from a source entity (calling party) to a destination device (called party) in a mobile communication system can be performed easily when the source entity knows an identifier of the destination device with which the destination device can be reached, such as a phone number.

There are situations however where the identifier with which the destination device can be reached is not known by the source entity.

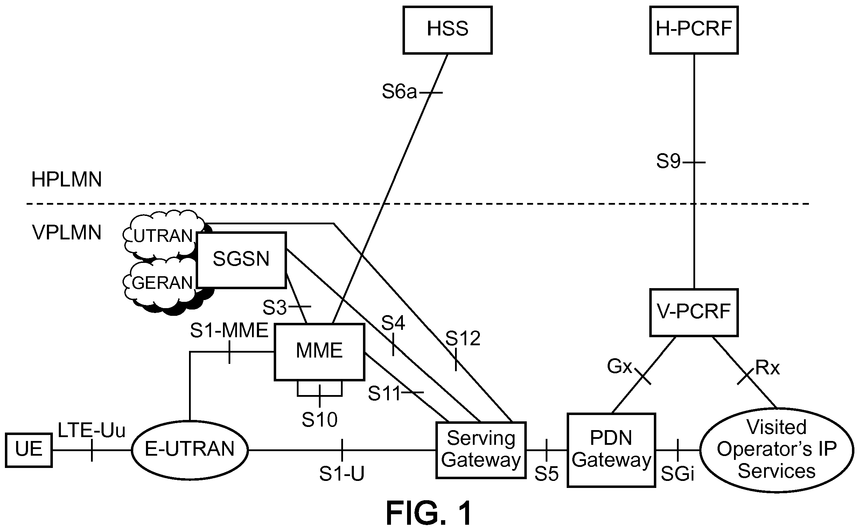

Let us take the non-limiting example of the Evolved Packet System (EPS) architecture as defined in 3GPP TR 23.401 (GPRS enhancements for E-UTRAN access). In the EPS architecture, the Evolved Packet Core (EPC) network exists in several flavours. Depicted in FIG.1 is the roaming EPC architecture with Local Breakout, which basically means that the IP address and the services in this configuration are provided by the Visited network. The IP address being hosted on a Packet Data Network Gateway (PDN GW or PGW), the latter also resides in the Visited network.

Document EP 1 263 171 A1 discloses a method for updating a Dynamic DNS server in a mobile context.

Another major EPC flavour (not shown here) is the "home routed" EPC architecture, which is used when the IP address and the services are hosted in the Home network.

EPC is a Packet Switched (PS) domain only architecture. All communications to and from a terminal are based on IP packet communication. The IP address assigned to the terminal can belong to the public or private address space. In the latter case, a Network Address Translation (NAT) device residing on or beyond the SGi reference point may be used for IP address translation.

When the terminal is assigned an IP address (public or private), the latter can be used immediately for client-server communications i.e. for communications that are always initiated by a client application running on the terminal.

However, barring some special cases of limited interest (e.g. statically assigned public IP addresses), this is not sufficient for enabling mobile terminated communications, such as "push" type communications (i.e. communications initiated by a server in the network towards the mobile device) or peer-to-peer communications (e.g. communications between two mobile devices).

If the IP address of the mobile device were known in advance by the server, then the latter could initiate Mobile Terminated (MT) communications with no problem.

However, most of the time a new IP address is dynamically assigned to the mobile device every time it attaches to the network, the main reason being that it may be assigned by a different administration than the one owning the mobile user's subscription. For instance, in reference to the Local Breakout architecture in Figure 1, the IP address is assigned by the Visited network (VPLMN), so it cannot be known in advance by the Home network (HPLMN).

Traditionally, the problem with MT communications has been approached in one of the following ways:• By using a separate channel (e.g. SMS) for delivery of a "push" stimulus to the terminal, triggering the latter to contact the server via client-server IP communication;• By overlaying a subsystem for peer-to-peer communications on top of EPS (e.g. the 3GPP's IP Multimedia Subsystem - IMS).

While both approaches are used today in 3GPP standards, they may not be suitable in certain cases because they put additional complexity on the device in the form of additional communication channel (e.g. SMS) or additional client software (e.g. IMS). Moreover, both these approaches incur additional delay, which makes them less suitable for time critical delivery of mobile terminated messages.

An object of the present invention is to improve this situation.

The invention is carried out according to the appended claims.

The preferred features of the above aspects which are indicated by the dependent claims may be combined as appropriate, and may be combined with any of the above aspects of the invention, as would be apparent to a person skilled in the art.
- FIG.1, already discussed, shows a conventional roaming EPC architecture with Local Breakout;
- FIG.2 is a schematic view of an exemplary system architecture in which the present invention may take place according to a first embodiment;
- FIG.3 is a flowchart showing exemplary messages exchanged in the system of FIG.2 within the framework of a first embodiment of the invention;
- FIG.4 is a flowchart showing messages exchanged within the framework of a conventional EPS Attach procedure;
- FIG.5 is a schematic view of a system architecture in which the present invention may take place according to a second embodiment;
- FIG.6 is a flowchart showing exemplary messages exchanged in the system of FIG.5 within the framework of a second embodiment of the invention;
- FIG.7 is a schematic view of an encapsulated IP packet that may be used within the framework of the second embodiment of the invention.

The invention is illustrated here in its application to mobile terminated communication to an MTC device from an MTC server.

It is reminded that MTC refers to Machine-Type Communication, which is a form of data communication which involves one or more entities that do not need human interaction. MTC is a Release-10 work item in 3GPP and the related service requirements are being specified in 3GPP TS 22.368 (Service requirements for Machine Type Communications; Stage 1), whereas the study on the MTC architecture is carried out in 3GPP TR 23.888 (System improvements for Machine Type Communications). Two predicted aspects of MTC are: a potentially very large number of communicating terminals, and to a large extent, little traffic per terminal, with sporadic transaction-oriented messaging bursts.

However, it will be understood that the invention is not limited to this application. For example, the considered mobile terminated communication may take place to an MTC device from another MTC device. The invention may also apply to any mobile terminated communication to any type of destination device through any type of mobile communication network and from any type of source entity.

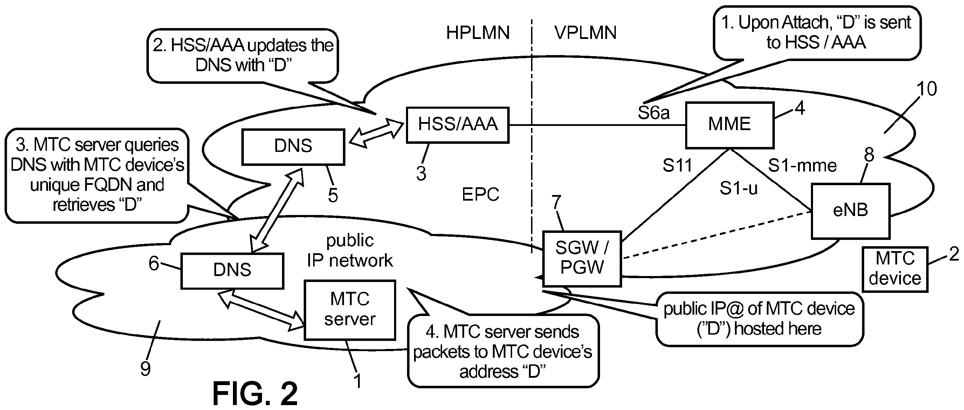

FIG.2 shows an exemplary non-limiting MTC architecture in which the invention may take place according to a first embodiment.

In this example, a mobile terminated communication may take place from the MTC server 1 to the MTC device 2 through the EPS mobile communication network 10. It is assumed that the MTC device 2 is roaming in a visited network (VPLMN). Here, all the relevant EPS nodes are thus located in the VPLMN, except for the HSS/AAA node that resides in the Home network (HPLMN). So the mobile communication network 10 may be seen as the combination of HPLMN and VPLMN in the present example (or in other words, there are two mobile communication networks involved in this case). It should be noted however that the invention may take place alternatively in a single mobile communication network (e.g. a HPLMN without a VPLMN), for example if the MTC device 2 is not in a roaming situation.

Note also that the entities shown in FIG.2 are the ones traditionally used in an LTE system. As will appear to one skilled in the art, other equipments may be used instead if the invention takes place in a non-LTE system. For example, any other type of subscriber server could be used in place of the HSS/AAA (e.g. HLR), any other type of mobile communication network node could be used in place of the MME (e.g. SGSN), any other gateway could be used in place of SGW/PGW (e.g. SGW only, PGW only, GGSN), etc.

As shown in FIG.2, the MTC server 1 is located in a public IP address network 9. In this context, this means that the MTC server 1 is assigned a public IP address in a public IP address space.

As for the MTC device 2, it is assigned a static unique identifier, here after called "host name". For example, this "host name" may be a fully qualified domain name (FQDN) identifier specific to the MTC device 2. Advantageously, this "host name" is unique globally.

This "host name" is advantageously assigned in addition to and in relation with any EPS-level identity (such as IMSI or MSISDN or any other identity within the mobile communication network) of the MTC device 2. As a non-limiting example, assuming that the MTC device 2 has an International Mobile Subscriber Identity (IMSI) as the EPS-level identity, the "host name" may be defined as "mtc.IMSI.pub.3gppnetworks.org" or any other IMSI related static unique identifier.

The "host name" is used as the primary addressing identifier for mobile terminated communications.

Upon attachment to the mobile communication network, or within the framework of any other appropriate procedure, the MTC device 2 that relies on IP communications is assigned an IP address. The latter is a public IP address in the present embodiment, which is advantageously dynamically assigned. Alternatively, the MTC device 2 may be assigned a private IP address, as will be discussed in a second embodiment. In roaming scenarios the dynamic IP address may be assigned in the Visited PLMN.

The association between the "host name" and the dynamically assigned (public) IP address is stored in the authoritative Domain Name System (DNS) server 5 in the Home PLMN.

When the MTC device 2 is assigned a dynamic (public) IP address, the authoritative DNS server 5 is kept up-to-date using DNS Update mechanisms.

The entity performing DNS updates is preferably, but not necessarily, located in the Home PLMN in order to reduce the number of trusted interfaces to the DNS server 5.

With reference with FIG.2, the HSS/AAA 3 is the entity that receives the IP address of the MTC device 2 and updates the DNS record containing the "host name" of the MTC device 2 in the authoritative DNS server 5 reachable via the public IP address network 9, with the MTC device 2 IP address.

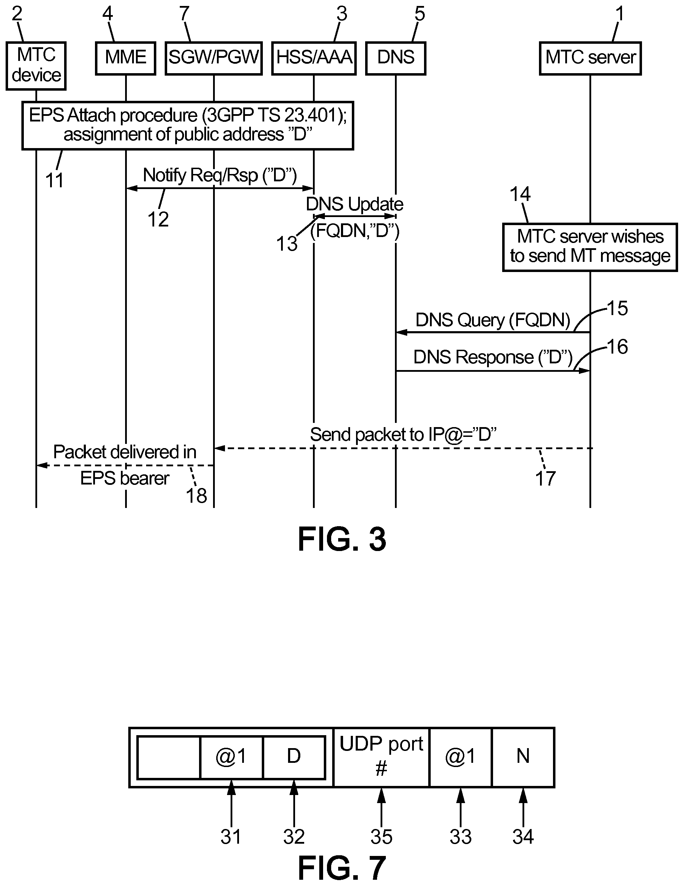

The corresponding steps are detailed here after with reference to FIG.3 (where the equipments shown are the ones of FIG.2).

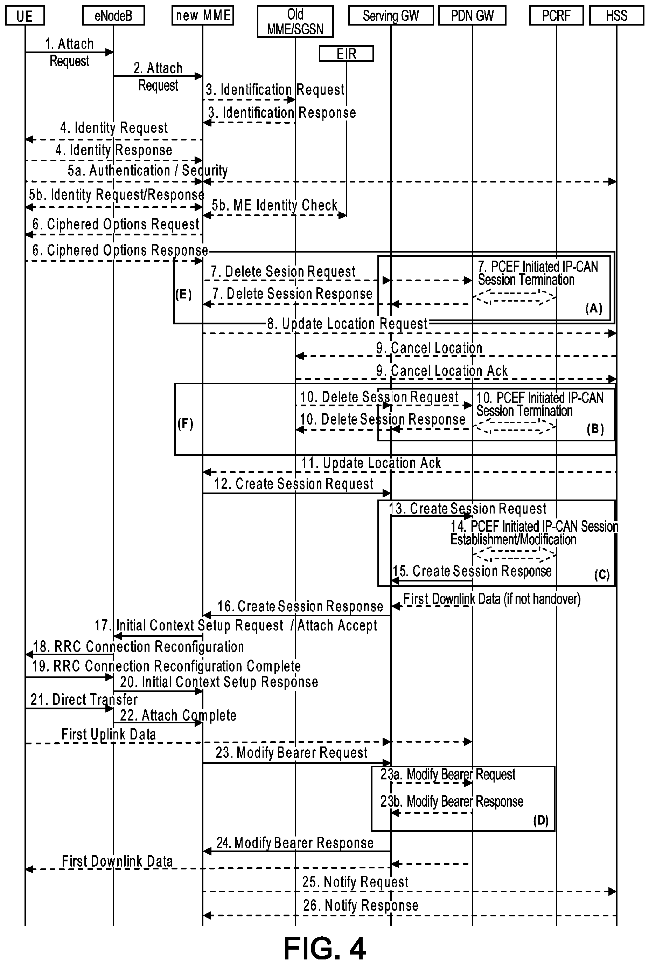

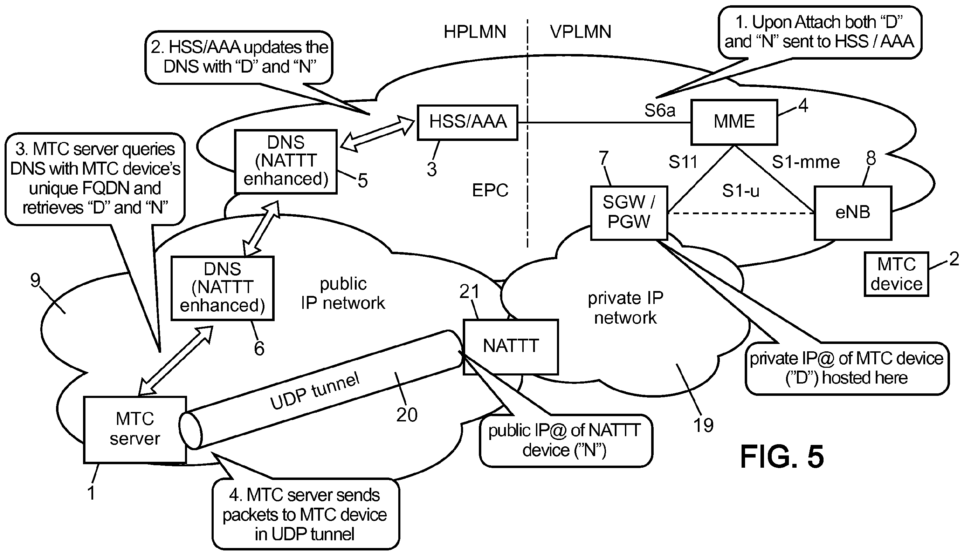

In step 11, the MTC device 2 performs an EPS Attach procedure. This attach procedure may be advantageously as described in 3GPP TS 23.401 V.8.7.0 (General Packet Radio Service (GPRS) enhancements for Evolved Universal Terrestrial Radio Access Network (E-UTRAN) access), the figure 5.3.2.1-1 of which is reproduced in FIG.4. When comparing the equipments of FIGs 2 and 3 and FIG.4, the MTC device 2 would correspond to the UE, the eNB 8 would correspond to the eNodeB, the SGW/PGW 7 would correspond to the Serving GW and the PDN GW, and the HSS/AAA 3 would correspond to the HSS. Other mappings may be envisaged however.

As part of the EPS Attach procedure 11, the MTC device 2 is assigned an IP address, referred to here shortly as "D". In the present embodiment, this MTC device 2 IP address is considered to be a public IP address. Note that the MTC device 2 IP address could alternatively be obtained via any other procedure.

The S5/S8/S11 Create Session Response message or any other message may be used to convey the MTC device 2 IP address "D" from the SGW/PGW 7 to the MME 4.

As part of the previous step 11, or at the end of the EPS Attach procedure 11, the MME 4 notifies the HSS/AAA 3 with "D", e.g. by means of the Notify Request message followed by the Notify Response message (see the messages 12 in FIG.3 and the last two messages in FIG.4). Alternatively, this notification may be forwarded on a direct path between the SGW/PGW 7 and the HSS/AAA 3.

Note that the HSS/AAA 3 could alternatively receive the MTC device 2 IP address "D" from a node of the mobile communication network in any other possible way.

The HSS/AAA 3 then updates with the MTC device 2 IP address "D" the DNS record containing the "host name" of the MTC device 2 in the authoritative DNS server 5 reachable via the public IP address network 9. To do so, it can for example send a DNS Update message 13 to the authoritative DNS server 5 in order to associate "D" with said DNS record for the MTC device 2 (the latter being referenced via its unique "host name"). This requires a new type of DNS record.

At some point 14 in time, the MTC server 1 may wish to initiate a Mobile terminated (MT) communication to the MTC device 2 through the mobile communication network 10.

Accordingly, the MTC server 1 may send a DNS query 15 that eventually reaches the authoritative DNS server 5 (possibly via another DNS server or a chain of other DNS servers). This DNS query 15 includes the "host name" i.e. the static unique identifier of the MTC device 2.

The DNS response 16 of the authoritative DNS server received by the MTC server 1 includes the MTC device 2 IP address "D".

Then the MTC server 1 can send at least one IP packet intended to the MTC device 2, by using its address "D" as a destination IP address (see reference 17).

On reception of the IP packet(s), the SGW/PGW 7 or any other suitable mobile communication network node can deliver it to the MTC device 2 via an EPS bearer (see reference 18).

So in the embodiment described above, the problem that may occur with dynamically assigned public IP addresses was circumvented by assigning to the destination device a static unique identifier in the form of "host name" such as a user specific FQDN. When a new public IP address is assigned to the destination device, the subscriber server owning the corresponding user's subscription updates the address-to-FQDN association in the authoritative DNS server.

This approach however is not sufficient for private IP addresses. This is because a destination device private IP address obtained via DNS resolution would then be a non-routable IP address.

A second embodiment of the present invention thus extends the above mentioned first embodiment for the case where the destination device is assigned a private IP address within a private IP address network.

This situation is illustrated in FIG.5, where the corresponding elements are designated with the same reference numbers as in FIG.2.

FIG.5 shows a private IP network 19 in which the MTC device 2 may be assigned a private IP address (for example a private IPv4 address due to the limitation of the public IPv4 address space). It also shows a tunneling border device, called NATTT device 21. The latter is located on the border of the private IP address network 19 and terminates a tunnel 20, e.g. a UDP tunnel, for IP packets sent from the MTC server 1 to the MTC device 2. The MTC device 2 private IP address is reachable through this NATTT device 21.

The notion of tunneling border device was developed in an article called "NAT Traversal through Tunneling (NATTT)", available at the following address: http://www.cs.arizona.edu/~bzhang/nat/nattt.htm.

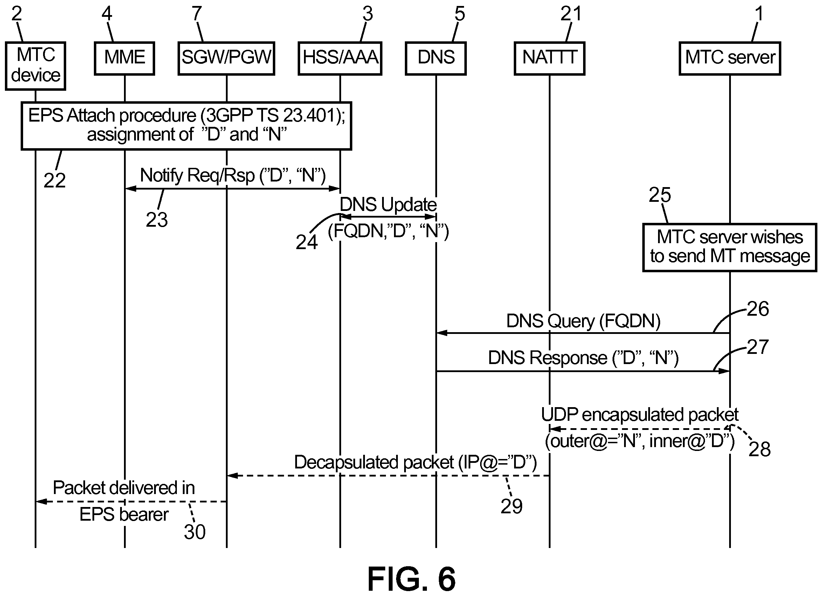

FIG.6 shows an example of steps that may be carried out to allow mobile terminated communication according to the second embodiment.

The steps of FIG.6 are similar to the ones already described with reference to FIG.3. However, the following additional features can be observed.

Also as part of the procedure EPS attach procedure 22 (or any other appropriate procedure), the SGW/PGW 7 returns, in addition to "D", the public IP address of the NATTT device 21, referred to here shortly as "N", through which the private address "D" is reachable. If there are several NATTT devices on the border of the private IP network, the SGW/PGW 7 may select any that provides access to the private address "D".

The S5/S8/S11 Create Session Response message may be used to convey both "D" and "N" from the SGW/PGW 7 to the MME 4.

The notification request (+response) 23, compared to the notification 12, includes the address "N" in addition to "D".

Note that the HSS/AAA 3 may receive the NATTT device 21 public IP address "N" in a different way, for example from a different node of the mobile communication network and/or in a notification message different from the one including the MTC device 2 IP address "D".

The HSS/AAA 3 updates the DNS record for the MTC device 2 (referenced via its unique "host name") in the authoritative DNS server 5, not only with "D" but also with "N". The two updates may be simultaneous, for example by means of a single DNS update message 13 as shown in FIG.3, or at different points in time, for example by means of two separate DNS update messages. As a result of the updates, the two addresses "D" and "N" are associated with the DNS record for the MTC device 2 containing its static unique identifier or "host name".

When a mobile terminated communication to the MTC device 2 is to be initiated through the mobile communication network by the MTC server 1 (step 25), the DNS query 26, which is sent by the MTC server 1 and includes the MTC device 2 "host name", eventually reaches the authoritative DNS server 5.

The DNC response 27 includes both the MTC device 2 private IP address "D" and the NATTT device 21 public IP address "N".

The MTC server 1 advantageously performs encapsulation of the IP packet(s) it wishes to send to the MTC device 2 and sends the encapsulated IP packet(s) to the NATTT device 21.

The encapsulation may be UDP encapsulation (which caters with NAT traversal of any nested NAT devices on the path) or any other encapsulation such as IP-in-IP encapsulation.

As shown in FIG.7, the encapsulation may be such that the destination IP address 34 in the outer IP header is set to "N" and the destination IP address 32 in the inner IP header is set to "D".

In case of UDP encapsulation, the UDP port in the UDP encapsulation header 35 may be set to a predetermined well-known value, as described in the above-mentioned article "NAT Traversal through Tunneling (NATTT)". Note that any other indication for the tunneling border NATTT device 21 to decapsulate and forward the IP packet(s) received from the MTC server 1 could be used in addition to or in replacement of said UDP port.

Also as shown in FIG.7, the source IP address in both the inner and outer IP headers (31 and 33) may be set to the public IP address of the MTC server 1 (referenced @1 in FIG.7).

On reception, the NATTT device 21 identifies the received packet as a NAT tunnelled packet, for example because it arrives on the well-known UDP port. It strips off the outer IP header and forwards the inner IP packet to the mobile communication network (see step 29).

The inner IP packet reaches the SGW/PGW 7 (or any other appropriate node of the mobile communication network) hosting the MTC device 2 private IP address "D". The SGW/PGW 7 then delivers the packet to the destination MTC device 2 via an appropriate EPS bearer (see step 30).

## Claims

1. A method for allowing a mobile terminated communication to a destination device (2) through at least one mobile communication network (10) from a source entity (1) located in a public IP address network (9), said method comprising:
receiving, by a subscriber server (3) residing in a home network of the mobile communication network, an IP address ("D") of the destination device from a Mobility Management Entity (4) residing in a visited network of the mobile communication network, wherein the destination device (2) is roaming in the visited network, wherein the destination device IP address ("D") is assigned during an attach procedure (11) of the destination device (2) with the mobile communication network (10) and is a dynamic IP address assigned by the visited network, and
updating, by the subscriber server (3), a DNS record containing a static unique identifier of the destination device stored in an authoritative DNS server (5) residing in the home network, so that the authoritative DNS server (5) responses a DNS query (15) including the static unique identifier with the destination device IP address ("D"), wherein the static unique identifier is a fully qualified domain name, FQDN.

2. The method as claimed in claim 1, wherein the static unique identifier is defined in addition to and in relation with an identity of the destination device (2) within the mobile communication network (10).

3. The method as claimed in any one of the foregoing claims, wherein said destination device is an MTC device (2) and said source entity (1) is an MTC server or an MTC device.

## Patentansprüche

1. Verfahren zum Ermöglichen einer an ein Mobilgerät gerichteten Kommunikation mit einer Zielvorrichtung (2) über zumindest ein Mobilkommunikationsnetz (10) von einer Quellentität (1) aus, die sich in einem Netz (9) mit öffentlicher IP-Adresse befindet, wobei das Verfahren Folgendes umfasst:
Empfangen - durch einen Teilnehmerserver (3), der sich in einem Heimnetz des Mobilkommunikationsnetzes befindet - einer IP-Adresse ("D") der Zielvorrichtung von einer Mobility Management Entity (4), die sich in einem besuchten Netz des Mobilkommunikationsnetzes befindet, wobei die Zielvorrichtung (2) in dem besuchten Netz roamt, wobei die IP-Adresse ("D") der Zielvorrichtung während eines Anschlussprozederes (11) der Zielvorrichtung (2) an das Mobilkommunikationsnetz (10) zugeordnet wird und eine dynamische IP-Adresse ist, die durch das besuchte Netz zugeordnet wird, und
Aktualisieren - durch den Teilnehmerserver (3) - eines DNS-Eintrags, der eine statische eindeutige Kennung der Zielvorrichtung enthält und in einem autorisierenden DNS-Server (5) gespeichert ist, der sich in dem Heimnetz befindet, sodass der autorisierende DNS-Server (5) eine DNS-Abfrage (15), welche die statische eindeutige Kennung enthält, mit der IP-Adresse ("D") der Zielvorrichtung beantwortet, wobei die statische eindeutige Kennung ein vollqualifizierter Domänenname, *fully qualified domain name* - FQDN, ist.

2. Verfahren nach Anspruch 1, wobei die statische eindeutige Kennung zusätzlich zu und in Verbindung mit einer Identität der Zielvorrichtung (2) innerhalb des Mobilkommunikationsnetzes (10) definiert ist.

3. Verfahren nach einem der vorangehenden Ansprüche, wobei die Zielvorrichtung eine MTC-Vorrichtung (2) ist und die Quellentität (1) ein MTC-Server oder eine MTC-Vorrichtung ist.

## Revendications

1. Procédé pour permettre une communication terminée mobile à un dispositif de destination (2) par l'intermédiaire d'au moins un réseau de communication mobile (10) à partir d'une entité source (1) située dans un réseau public à adresse IP (9), ledit procédé comprenant :
la réception, par un serveur d'abonné (3) se trouvant dans un réseau domestique du réseau de communication mobile, d'une adresse IP (« D ») du dispositif de destination, à partir d'une entité de gestion de mobilité (4) se trouvant dans un réseau visité du réseau de communication mobile, dans lequel le dispositif de destination (2) est itinérant dans le réseau visité, dans lequel l'adresse IP de dispositif de destination (« D ») est attribuée durant une procédure de connexion (11) du dispositif de destination (2) auprès du réseau de communication mobile (10) et est une adresse IP dynamique attribuée par le réseau visité, et
la mise à jour, par le serveur d'abonné (3), d'un enregistrement DNS contenant un identifiant unique statique du dispositif de destination stocké dans un serveur DNS d'autorité (5) se trouvant dans le réseau domestique, de sorte que le serveur DNS d'autorité (5) réponde à une interrogation DNS (15) incluant l'identifiant unique statique avec l'adresse IP de dispositif de destination (« D »), dans lequel l'identifiant unique statique est un nom de domaine totalement qualifié, FQDN.

2. Procédé selon la revendication 1, dans lequel l'identifiant unique statique est défini en plus de et par rapport à une identité du dispositif de destination (2) à l'intérieur du réseau de communication mobile (10).

3. Procédé selon l'une quelconque des revendications précédentes, dans lequel ledit dispositif de destination est un dispositif MTC (2) et ladite entité source (1) est un serveur MTC ou un dispositif MTC.
